# EUROPÄISCHE PATENTSCHRIFT

(11) **EP 0 512 130 B1**
(45) Veröffentlichungstag und Bekanntmachung des Hinweises auf die Patenterteilung: **24.07.1996**
(21) Anmeldenummer: 91107187.6
(22) Anmeldetag: 03.05.1991
(51) Int. Cl.: H04N 5/18

(54) **Schaltung zur Klemmung von Videosignalen**
Clamping circuit for video signals
Dispositif de verrouillage de signaux vidéo

(43) Veröffentlichungstag der Anmeldung: 11.11.1992
(73) Patentinhaber: SIEMENS AKTIENGESELLSCHAFT, 80333 München (DE)
(72) Erfinder: Langenkamp, Ulrich, Dipl.-Ing., W-8012 Ottobrunn (DE); Kramer, Ronalf, Dipl.-Ing., W-8000 München 60 (DE); Kümmerle, Gilbert, Dipl.-Ing., W-8000 München 19 (DE)

(56) Entgegenhaltungen:
- EP-A- 0 178 044
- JP-A- 6 087 574
- US-A- 4 853 782
- US-A- 5 008 753
- PATENT ABSTRACTS OF JAPAN, Band 14, Nr. 336 (E-953)[4279], 19. Juli 1990; & JP-A-2 112 386
- ELEKTRONIK, Band 5, 6. März 1987, Seiten 105-108, München, DE; W. MÖRING: "Chrominanzdemodulation im TV-Decoder mit Zeilenverkopplung"

## Beschreibung

Die Erfindung betrifft ein Gerät zum Verarbeiten von in Zeilen aufgeteilten Videosignalen mit einer Synchronsignalabtrennstufe, um für die Verarbeitung notwendige Synchrontaktsignale zu erzeugen, wobei vor einem Eingang einer in der Synchronabtrennstufe enthaltenen Synchronisationseinrichtung eine Klemmschaltung mit nachgeschalteter Analog-Digital-Wandlereinrichtung, die einen vorgegebenen Aussteuerbereich aufweist, geschaltet ist, durch die Klemmschaltung das Videosignal auf vorgegebene unterschiedliche Potentiale klemmbar ist und eine Steuereinrichtung vorgesehen ist, die mit der Klemmschaltung verbunden ist und durch die das Klemmen des Videosignales auf die vorgegebenen unterschiedlichen Potentiale so steuerbar ist, daß ein Synchronsignalanteil des Videosignales auf einen Klemmpegel innerhalb des Aussteuerbereichs der Analog-Digital-Wandlereinrichtung gebracht wird.

Bei solchen Geräten, wie z. B. Fernsehgeräten oder Videorekordern, wird stets eine Synchronisationseinrichtung eingesetzt, die aus Synchronsignalanteilen des Videosignales die zur zeitrichtigen Verarbeitung des Videosignales notwendigen Synchrontaktsignale erzeugt. Solche Synchronisationseinrichtungen sind prinzipiell Phasenregelkreise.

Problematisch bei solchen Synchronisationseinrichtungen ist die Tatsache, daß der Gleichanteile des Videosignales, das z. B. ein FBAS-Signal sein kann, und dessen Amplitude erheblich schwanken können. Dies ist insbesondere dann der Fall, wenn von einer Videosignalquelle auf eine andere Videosignalquelle umgeschaltet wird. Außerdem kann anstelle eines Videosignals auch nur Rauschen am Eingang der Synchronisationseinrichtung anliegen, z. B. für die Zeit des Senderwechsels am Gerät.

Zur Lösung dieses Problems werden sogenannte Klemmschaltungen eingesetzt, die entweder den Maximal- bzw. Minimalwert (= Syncboden) der Synchronimpulse oder das Potential der Schwarzschulter des Videosignales auf ein konstantes Bezugspotential festklemmen.

Beispiele solcher Klemmschaltungen sind unter anderem in der DE 36 25 702 C2 oder DE 25 49 626 A1 beschrieben.

Wird als Synchronisationseinrichtung eine digitale Synchronisationseinrichtung eingesetzt, wie z. B. eine aus Elektronik 5/6, 1987, Seiten 105 bis 108 und Bild 3 bekannte digitale HPLL-Schaltung, so muß der digitalen Synchronisationseinrichtung ein über eine Analog-Digital-Wandlereinrichtung gewonnenes digitales Videosignal zugeführt werden. Solche Analog-Digital-Wandlereinrichtungen verfügen aber nur über einen begrenzten Aussteuerbereich, d. h., daß das analoge Eingangssignal einen unteren Wert nicht unterschreiten und einen oberen Wert nicht überschreiten darf. Das eingangs erwähnte Schwanken des Videosignales kann aber dazu führen, daß das Videosignal die Grenzen unter- bzw. überschreitet, weswegen die digitale Synchronisationseinrichtung nicht mehr "einrasten" kann und eine synchrone Klemmung auf den Boden des Synchronimpulses oder dem Schwarzwert des Videosignales nicht mehr möglich ist.

In der US-Patentschrift US-A-4 853 782 ist ein Fernsehgerät beschrieben, bei dem durch eine Klemmschaltung das empfangene Videosignal derart geklemmt wird, daß es im Aussteuerungsbereich eines nachgeschalteten Analog-Digital-Wandlers liegt. Durch eine Umschalteinrichtung kann die Klemmschaltung auf verschiedene Klemmpegel eingestellt werden. Die Klemmpegel umfassen einen Mittelwert des Aussteuerbereichs des A/D-Wandlers sowie einen oberen und einen unteren Klemmpegel. Die Klemmpegel werden in Abhängigkeit von einer Zeitsteuereinrichtung und von einer die Synchronsignale des geklemmten Videosignals auswertenden Einrichtung gesteuert.

In der europäischen Patentanmeldung EP-A-0 178 044 ist eine Klemmschaltung gezeigt, durch die ein Videosignal in den Aussteuerbereich eines A/D-Wandlers gebracht wird. Hierbei wird eine Klemmspannung über einen zeitrichtig gesteuerten Schalter an einen Kondensator, der zwischen dem Eingangsanschluß für das Videosignal und dem Eingang des A/D-Wandlers liegt, gelegt.

Der Erfindung liegt die Aufgabe zugrunde, ein Gerät zu schaffen, durch das eine digitale Synchronisationseinrichtung sicher auf Synchronsignalanteile eines Videosignales einrasten kann. Dabei soll es keine Rolle spielen, ob der Gleichanteil des Videosignales schwankt und/oder unbekannt ist.

Diese Aufgabe wird dadurch gelöst, daß durch die Steuereinrichtung erste, zweite und dritte Steuersignale für die einen Klemmkondensator aufweisende Klemmschaltung bereitstellbar sind, um das Klemmen des Videosignales in mindestens drei Phasen zu ermöglichen: einer ersten Phase, in der das Videosignal für die Dauer von mehreren Zeilen in Abhängigkeit vom ersten Steuersignal auf ein unteres Potential der Analog-Digital-Wandlereinrichtung klemmbar ist; einer zweiten Phase, in der das Videosignal für eine vorgebbare Zeit in Abhängigkeit vom zweiten Steuersignal auf ein oberes Potential innerhalb des Aussteuerbereiches der Analog-Digital-Wandlereinrichtung klemmbar ist; und einer dritten Phase, in der das Videosignal in Abhängigkeit vom dritten Steuersignal synchron zum Videosignal pulsweise auf den Klemmpegel klemmbar ist.

Weiterbildungen der Erfindung sind Gegenstand der Unteransprüche.

Von besonderem Vorteil ist bei dem erfindungsgemäßen Gerät, daß aus allen möglichen Ausgangsituationen eines Videosignales sicher auf die Synchronsignalanteile dieses Videosignales ein Einrastvorgang ermöglicht wird, wobei die Synchronisationseinrichtung auf die übrigen Signalanteile des Videosignales nicht anspricht. Darüber hinaus erlaubt es das erfindungsgemäße Gerät rasch einen Synchronzustand der Synchronsignalabtrennstufe zu erreichen.

Die Erfindung wird im folgenden anhand von sechs Figuren näher erläutert.

Es zeigen:
- FIG 1: ein Prinzipschaltbild eines erfindungsgemäßen Gerätes zum Verarbeiten von Videosignalen mit einer Synchronabtrennstufe,
- FIG 2: ein Prinzipschaltbild der Synchronabtrennstufe mit Klemmschaltung, Analog-Digital-Wandlereinrichtung, Steuereinrichtung und Synchronisationseinrichtung,
- FIG 3: Prinzipschaltbilder von Schalteinrichtungen, wie diese in der Klemmschaltung von FIG 2 verwendbar sind.
- FIG 4: die Klemmschaltung von FIG 2 mit möglichen Schalteinrichtungen zum Klemmen des Videosignales auf unterschiedliche Potentiale, dargestellt als Prinzipschaltung,
- FIG 5: ein Ablaufdiagramm zur Funktionsweise des Prinzipschaltbildes von FIG 2, und
- FIG 6: mögliche Pegellagen des Videosignales in der Anordnung von FIG 2.

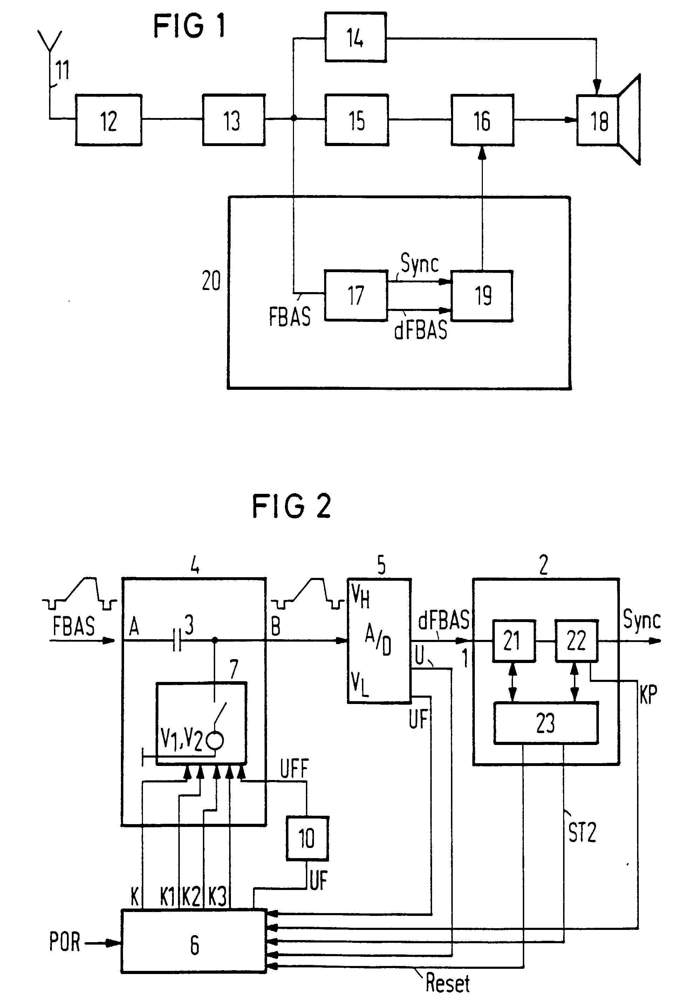

In FIG 1 ist als Beispiel für ein erfindungsgemäßes Gerät ein Prinzipschaltbild eines Fernsehgerätes dargestellt. Dieses Fernsehgerät ist zum Empfang von Teletextsignalen geeignet und mit einer Einrichtung 20 zum Speichern einer Vielzahl von Teletextseiten versehen, wobei das Fernsehgerät einen eingangsseitigen Tuner 12 zeigt, der HF-Eingangssignale von einer dargestellten Antenne 11 oder einem nicht dargestellten Kabelanschluß empfängt. Dem Tuner 12 ist ein Video-ZF-Verstärker 13 nachgeschaltet, dessen Ausgangssignal FBAS sowohl einer Horizontal- und Vertikal-Ablenkstufe 14 als auch einem Farbdekoder 15 mit nachgeschalteter Videoendstufe 16 zugeführt ist. Eine Bildröhre 18 wird von der Horizontal- und Vertikalablenkstufe 14 und der Videoendstufe 16 angesteuert.

Zum Empfang der Teletextsignale, die in den Vertikalaustastlücken des Videosignales FBAS übertragen werden, ist der Ausgang der Video-ZF-Stufe 13 mit der oben bereits erwähnten Einrichtung 20 verbunden, einem sogenannten Teletextdekoder, der die Teletextsignale im Videotextsignal erkennt und den Datenstrom dieser Teletextsignale vom Rest des Videosignales FBAS (Farbburst, Synchronsignale etc.) in einer Synchronabtrennstufe 17 abtrennt. Darüberhinaus wird in dieser Einrichtung 20 ein Datentakt erzeugt, der zum Datentakt des Teletextsignales synchronisiert ist. Anschließend erfolgt in der Teletextsignalverarbeitungsstufe 19 die eigentliche Datenverarbeitung der Teletextsignale.

Um die Teletextsignale zeitrichtig verarbeiten zu können, ist es notwendig, in der Einrichtung 20 aus dem vom Video-ZF-Verstärker 13 bereitgestellten analogen Videosignal FBAS Synchronsignalanteile abzutrennen, um damit die für die zeitrichtige Verarbeitung der Teletextsignale notwendigen synchronen Taktsignale Sync erzeugen zu können. Die Syncabtrennung kann prinzipiell auch in der Vertikal-Ablenkstufe 14 oder im Farbdekoder 15 (vgl. dazu FIG 1) erfolgen und von dort übernommen werden. Es gibt aber Betriebsfälle, in denen Display und Teletext mit unterschiedlichen Signalen arbeiten, die nicht untereinander synchronisiert sind. Deswegen ist in der Einrichtung 20 die Synchronsignalabtrennstufe 17 vorgesehen, der das analoge Videosignal FBAS zuführbar ist und an deren Ausgang ein Synchrontaktsignal Sync sowie digitale Videosignale dFBAS - hier digitale Teletextsignale - abgreifbar sind. Die Synchrontaktsignale Sync und digitalen Teletextsignale dFBAS werden dann der eigentlichen Teletextsignalverarbeitungsstufe 19 zugeführt, in der die Datenverarbeitung der Teletextsignale erfolgt. Die bei der Datenverarbeitung des Teletextsignales ermittelten Teletextdaten werden im Teletextdecoder in einer gesonderten Speichereinrichtung abgelegt und dessen Inhalt über einen Zeichengenerator der Videoendstufe 16 des Fernsehgerätes zugeführt, womit eine Teletextseite auf der Fernsehbildröhre 18 des Fernsehgerätes bei Bedarf einblendbar ist.

FIG 2 zeigt ein Prinzipschaltbild der Synchronabtrennstufe 17 mit einer digitalen Synchronisationseinrichtung 2, einer Analog-Digital-Wandlereinrichtung 5, einer Steuereinrichtung 6 sowie einer Klemmschaltung 4.

Die Synchronabtrennstufe 17 ist in folgender Weise aufgebaut: Ein analoges Videosignal, das beispielsweise ein FBAS-Signal sein kann, wird einer Eingangsklemme A der Klemmschaltung 4 zugeführt. Ein Ausgang B dieser Klemmschaltung 4 ist mit einem Eingang der Analog-Digital-Wandlereinrichtung 5 verbunden, die einen vorgegebenen Aussteuerbereich aufweist. Der Aussteuerbereich ist durch eine untere Grenze V_{L} und eine obere Grenze V_{H} bestimmt, zwischen denen die Eingangssignale der Analog-Digital-Wandlereinrichtung 5 liegen müssen, um eine einwandfreie Analog-Digital-Wandlung zu erreichen. Als untere Grenze V_{L} kann beispielsweise 0 V und als obere Grenze V_{H} 2 V herangezogen werden. An einem Ausgang dieser Analog-Digital-Wandlereinrichtung 5 ist ein digitales Videosignal dFBAS abgreifbar, das der im einzelnen noch später zu erläuternden Synchronisationseinrichtung 2 zugeführt wird. Zusätzlich weist die Analog-Digital-Wandlereinrichtung 5 noch zwei weitere Ausgänge auf, an denen ein erstes Statussignal U und ein zweites Statussignal UF abgreifbar sind. Das erste Statussignal U zeigt an, ob eine im Aussteuerbereich der Analog-Digital-Wandlereinrichtung 5 liegende Schwelle V_{U} - die noch erläutert wird - unterschritten wird. Das zweite Statussignal UF zeigt an, ob das Signal am Ausgang B der Klemmschaltung 4 unterhalb der unteren Grenze V_{L} der Analog-Digital-Wandlereinrichtung 5 liegt.

Aus dem digitalen Videosignal dFBAS erzeugt die Synchronisationseinrichtung 2 Synchrontaktsignale Sync, die zur weiteren Verarbeitung der Videosignale notwendig sind. Zusätzlich ist in der Synchronisationeinrichtung 2 ein weiterer Ausgang vorgesehen, an dem Klemmimpulse KP, die ebenfalls noch später erläutert werden, abgreifbar sind.

Weiterhin weist die Schaltung von FIG 2 die bereits erwähnte Steuereinrichtung 6 auf, die mit der Klemmschaltung 4 verbunden ist und durch die ein Klemmen des Videosignales FBAS auf vorgegebene unterschiedliche Potentiale V1, V2 so steuerbar ist, daß ein Synchronsignalanteil des Videosignales FBAS sicher in den Aussteuerbereich V_{L} - V_{H} der Analog-Digital-Wandlereinrichtung 5 gebracht wird. Dazu erhält die Steuereinrichtung 6 die bereits erwähnten ersten und zweiten Statussignale U, UF und die Klemmimpulse KP zugeführt. An Ausgängen der Steuereinrichtung 6 sind zur Steuerung der Klemmschaltung 4 erste, zweite und dritte Steuersignale K1, K2, K3, Pulse K und das zweite Statussignal UF abgreifbar. Die Steuereinrichtung 6 überprüft das erste Statussignal U darauf, ob eine im Aussteuerbereich der Analog-Digital-Wandlereinrichtung 5 liegende Schwelle V_{U} mindestens einmal innerhalb der Dauer einer Zeile des Videosignals FBAS unterschritten wird. Das zweite Statussignal UF kann über eine Tiefpaßeinrichtung 10 geführt werden, damit die noch zu erläuternde Regelung nicht auf einen verrauschten Videosignalpegel anspricht. Am Ausgang dieser Tiefpaßeinrichtung 10 ist dann das tiefpaßgefilterte Statussignal UFF abgreifbar. Dieses tiefpaßgefilterte Statussignal UFF sowie die ersten, zweiten und dritten Steuersignale K1, K2, K3 und die Pulse K werden der Klemmschaltung 4 zugeführt, wodurch das Videosignal FBAS auf vorgegebene unterschiedliche Potentiale V₁, V₂ klemmbar ist.

Die Klemmschaltung 4 weist einen zwischen den Eingang A und den Ausgang B geschalteten Klemmkondensator 3 auf, sowie eine zwischen den Ausgang B und Bezugspotential geschaltete Schalteinrichtung 7. Diese Schalteinrichtung 7 ist so ausgestaltet, daß das Videosignal FBAS auf eines der vorgegebenen Potentiale V₁, V₂ für eine von der Steuereinrichtung 6 vorgegebene Zeitdauer geschaltet werden kann.

Durch die Steuereinrichtung 6 erfolgt das Klemmen des Videosignales FBAS auf die unterschiedlichen Potentiale V₁, V₂ in mindestens drei Phasen:
- einer ersten Phase, in der das Videosignal FBAS für die Dauer von mehreren Zeilen des Videosignales in Abhängigkeit vom ersten Steuersignal K1 auf ein unteres Potential V₁ der Analog-Digital-Wandlereinrichtung 5 klemmbar ist;
- einer zweiten Phase, in der das Videosignal FBAS für eine vorgebbare Zeit in Abhängigkeit vom zweiten Steuersignal K2 auf ein oberes Potential V₂ innerhalb des Steuerbereiches V_{L} - V_{H} der Analog-Digital-Wandlereinrichtung 5 klemmbar ist; und
- einer dritten Phase, in der das Videosignal FBAS in Abhängigkeit vom dritten Steuersignal K3 synchron zum Videosignal FBAS pulsweise auf ein Klemmpotential V₃ klemmbar ist.

Die Schalteinrichtung 7 weist dazu zweckmäßigerweise parallelgeschaltete und jeweils von der Steuereinrichtung 6 aktivierbare Schalteinrichtungen 7a, 7b, 7c auf.

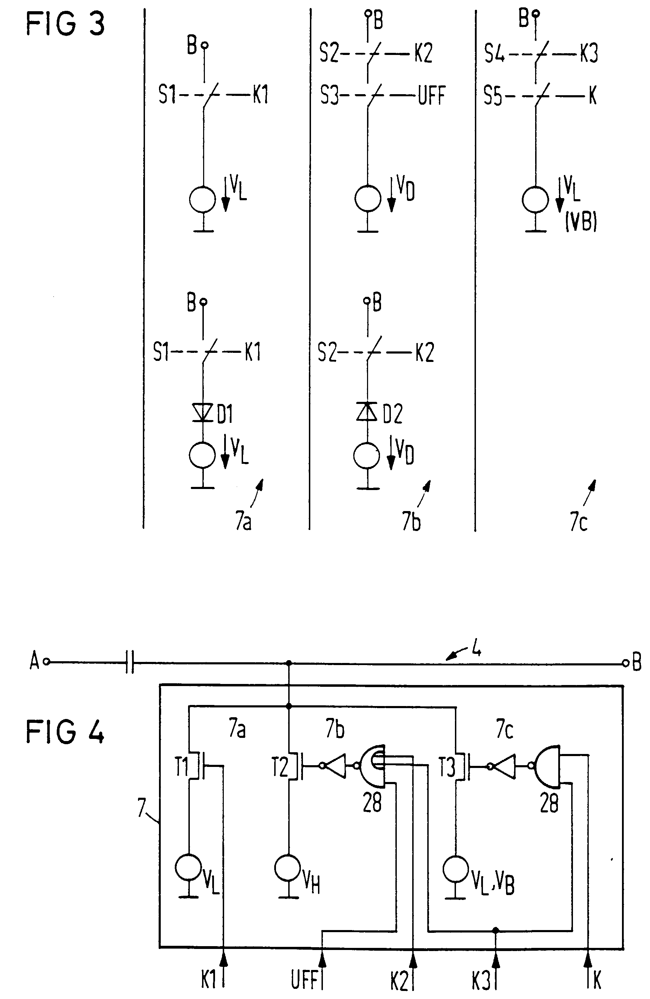

In FIG 3 sind Prinzipschaltbilder für solche Schalteinrichtungen 7a, 7b und 7c dargestellt. Dabei wird angenommen, daß als unteres Potential V₁ die untere Grenze V_{L} des Aussteuerbereiches der Analog-Digital-Wandlereinrichtung 5 und als oberes Potential V₂ ein geeignetes Potential V_{D} gewählt werden, das größer als V_{L} ist, vorzugsweise V_{L} < V_{D} < V_{U} . Als mögliche Schalteinrichtung 7a kann beispielsweise ein zwischen dem Ausgang B der Klemmschaltung 4 und dem Potential V_{L} angeordneter Schalter S1 vorgesehen werden, der durch das erste Steuersignal K1 der Steuereinrichtung 6 steuerbar ist. Um eine Diodenklemmung des Maximalwertes des Videosignales auf das Potential V_{L} zu erreichen, kann zusätzlich zwischen dem Schalter S1 und dem Potential V_{L} eine Diode D1 so geschaltet werden, daß ihr Katodenanschluß mit dem Potential V_{L} und ihr Anodenanschluß mit dem Schalter S1 verbunden ist.

Eine zweite Schalteinrichtung 7b kann so gestaltet sein, daß zwischen dem Ausgang B der Klemmschaltung 4 und dem Potential V_{D} zwei Schalter S2, S3 in Reihe liegen und bei dem der Schalter S2 vom zweiten Steuersignal K2 der Steuereinrichtung 6 und der Schalter 53 vom tiefpaßgefilterten zweiten Statussignal UFF steuerbar ist. Darüberhinaus könnte die zweite Schalteinrichtung 7b aber auch nur den Schalter S2 aufweisen. In diesem Fall müßte eine Diode D2 mit ihrem Katodenanschluß an den Schalter S2 und mit ihrem Anodenanschluß an das Potential V_{D} geschaltet werden. Die Steuerung in Abhängigkeit vom tiefpaßgefilteren zweiten Statussignal UFF würde dann entfallen.

Die dritte Schalteinrichtung 7c weist ebenfalls zwei zwischen dem Ausgang B der Klemmschaltung und dem vorgegebenen Potential in Reihe geschaltete Schalter S4, S5 auf, von denen der Schalter S4 vom dritten Steuersignal K3 und der Schalter S5 vom Puls K gesteuert wird. Das vorgegebene Potential hängt davon ab, ob auf den Syncboden oder den Schwarzwertpegel des Videosignales geklemmt werden soll. Wird auf den Syncboden des Videosignales FBAS geklemmt, so ist das vorgegebene Potential V_{L}. Soll dagegen auf den Schwarzwert des Videosignales geklemmt werden, so ist das vorgegebene Potential der Schwarzwertklemmpegel V_{B}.

FIG 4 zeigt ein Ausführungsbeispiel der Schalteinrichtung 7 mit drei parallelgeschalteten Schalteinrichtungen 7a, 7b und 7c, die jeweils MOS-Transistoren T1, T2 und T3 als Schalter aufweisen, die vom ersten, zweiten und dritten Steuersignal K1, K2, K3, dem tiefpaßgefilterten zweiten Statussignal UFF sowie dem Puls K über Logikanordnungen 28 gesteuert werden.

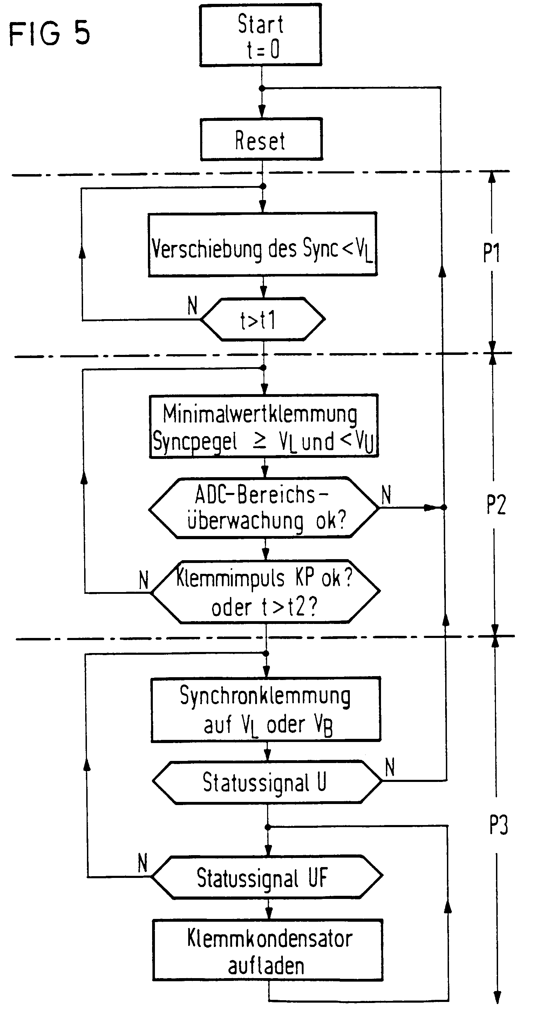

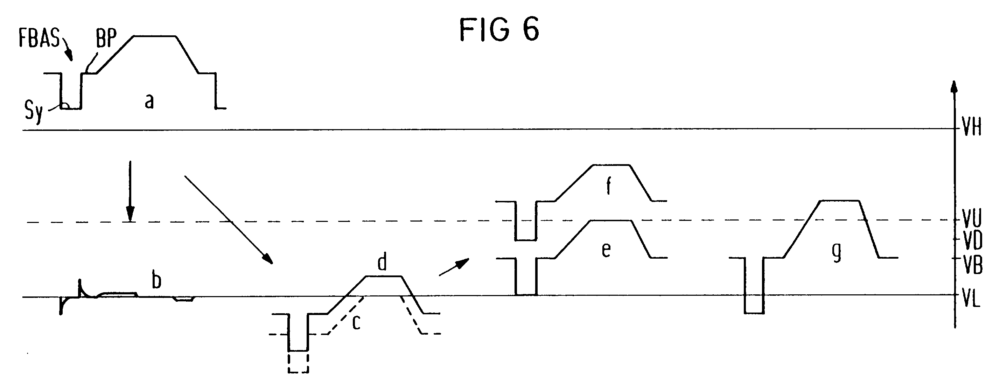

Die Funktionsweise der erfindungsgemäßen Einrichtung nach FIG 2 wird im folgenden anhand eines in FIG 5 dargestellten Ablaufdiagramms sowie der dazugehörenden möglichen und in FIG 6 dargestellten Pegellagen des Videosignales FBAS erläutert. In FIG 6 ist der Aussteuerbereich der Analog-Digital-Wandlereinrichtung durch die bereits erwähnten oberen und unteren Grenzen V_{H}, V_{L} definiert. V_{U} bezeichnet einen Überwachungspegel, der zur Überwachung des Aussteuerbereiches der Analog-Digital-Wandlereinrichtung 5 vorgesehen werden muß. Mit V_{B} ist der Schwarzwertklemmpegel bezeichnet, der zur Klemmung des Videosignales FBAS auf einen Schwarzwert notwendig ist. Soll dagegen auf den Syncboden geklemmt werden, muß als Klemmpegel V_{L} vorgesehen werden. Das Videosignal FBAS weist den bereits bekannten Syncboden Sy sowie eine Schwarzwertschulter BP auf.

Eingeleitet wird der Klemmvorgang zu einem Zeitpunkt t = 0 im allgemeinen durch ein Reset-Signal POR (vgl. FIG 2) oder ein anderes externes Signal, das z. B. bei Senderwechsel der Steuereinrichtung 6 zugeführt wird. Die Synchronisationseinrichtung 6 wird durch ein Signal RESET in ihren Ausgangszustand gebracht. Das am Eingang A der Klemmschaltung 4 anliegende Videosignal FBAS kann beispielsweise die in FIG 6 mit a bezeichnete Lage aufweisen. In diesem Ausführungsbeispiel sei angenommen, daß zu Beginn des Klemmvorgangs das Videosignal FBAS am Knoten B über der oberen Grenze V_{H} des Aussteuerbereichs der Analog-Digital-Wandlereinrichtung 5 liegt.

In der ersten Phase P1 des Klemmvorgangs stellt die Steuereinrichtung 6 das erste Steuersignal K1 zur Verfügung, um den in FIG 7a gezeigten ersten Schalter S1 für die Dauer t1 von mehreren Zeilen des Videosignales, z. B. 5 bis 10 Zeilen, zu schließen. Während dieser Zeit kann sich der Klemmkondensator 3 in der Klemmschaltung 4 aufladen und zwar auf den Mittelwert des Gleichanteils des Videosignales FBAS. Mit b ist das Videosignal FBAS während dieser ersten Phase P1 dargestellt, bei der der Ausgang B der Klemmschaltung 4 wegen des geschlossenen Schalters S1 einen Kurzschluß nach V_{L} darstellt. Während der ersten Phase P1 wird sichergestellt, daß der Syncboden Sy des Videosignales FBAS unterhalb von V_{L} liegt. In FIG 6 zeigt b das Videosignal während der Phase P1, bei der sich der Klemmkondensator 3 auflädt. Das Videosignal am Ende dieser Phase P1 ist mit c für den Fall der Diodenklemmung gezeigt. Abhängig vom Gleichanteil des Videosignales FBAS kann das Videosignal FBAS am Ende dieser ersten Phase P1 am Ausgang der Klemmschaltung auch den mit d bezeichneten Verlauf aufweisen.

Nach der Zeit t1 wird von der Steuereinrichtung 6 die zweite Phase P 2 eingeleitet. In dieser zweiten Phase P2 wird der Syncboden Sy des Videosignales FBAS in den unteren Teil des Aussteuerbereiches, V_{L} - V_{H} der Analog-Digital-Wandlereinrichtung 5 geschoben. Dies wird entweder durch eine Diodenklemmung auf das Potential V_{D}, das größer als die untere Grenze V_{L} und kleiner als der Überwachungspegel V_{U} ist, erreicht oder durch eine sogenannte Underflow-Regelung. Dabei wird der Ausgang B aufgeladen, wenn die Spannung des Videosignales die untere Grenze V_{L} unterschreitet.

Ein Driften des Videosignales FBAS zu positiveren Gleichspannunglagen aufgrund parasitärer Ströme kann vermieden werden entweder durch einen sehr kleinen Entladestrom und/oder durch eine Überwachung des Aussteuerbereichs V_{L} - V_{H} der Analog-Digital-Wandlereinrichtung 5 derart, daß wenn das Signal am Ausgang B den Überwachungspegel V_{U} nicht mindestens einmal pro Zeile unterschreitet, die erste Phase P1 wieder eingeleitet wird. Diese Phase P2 wird von der Steuereinrichtung 6 durch Schließen der Schalter S2, S3 bzw. des Schalters S2 bei Diodenklemmung erreicht (vgl. dazu 7b in FIG 3). Der Schalter S2 wird in der zweiten Phase P2 für die Zeitdauer t2 geschlossen. Am Ende dieser Phase P2 liegt der Syncboden Sy definitionsgemäß im unteren Aussteuerbereich V_{L} - V_{H} der Analog-Digital-Wandlereinrichtung 5. Damit kann die Synchronisationseinrichtung 2 auf das Synchronisationssignal, hier den Syncboden Sy, des Videosignals FBAS einrasten, d. h., daß am Ausgang der Synchronisationseinrichtung 2 ein Synchrontaktsignal Sync abgreifbar ist, das zum Auftreten des Syncbodens Sy im Videosignal FBAS synchron ist. Die Zeit t2 wird zweckmäßigerweise so gewählt, daß ein sicheres Einrasten der Synchronisationseinrichtung 2 ermöglicht wird.

Nach dieser Zeit t2 wird von Phase P2 auf Phase P3 umgeschaltet. In dieser dritten Phase P3 wird das Videosignal FBAS vom Puls K der Steuereinrichtung 6 synchron zum Videosignal FBAS pulsweise auf das Potential V_{L} bei Syncbodenklemmung bzw. auf das Potential V_{B} bei Schwarzwertklemmung geklemmt oder geregelt. Das Klemmen/Regeln des Videosignales FBAS erfolgt dabei synchron zum Auftreten des Syncbodens Sy im Videosignal FBAS. Ein Impuls des Pulses K kann daher von der Steuereinrichtung 6 jeweils nach Ablauf einer vorgegebenen Zeitdauer nach Erscheinen des Syncbodens Sy , z. B. in der Mitte des Syncbodens Sy bereitgestellt werden . Durch das pulsweise Bereitstellen der Impulse des Pulses K wird also ein zum Videosignal FBAS synchrones Klemmen des Videosignales FBAS auf das untere Potential V_{L}, bzw. V_{B} gewährleistet. Dieses pulsweise Klemmen wird im Ablaufdiagramm von FIG 5 als Synchronklemmung bezeichnet.

Die Synchronisationseinrichtung 2 stellt Klemmimpulse KP bereit, durch die das zeitrichtige pulsweise Klemmen des Videosignales FBAS am Ausgang B der Klemmschaltung 4 gewährleistet wird. Diese Klemmimpulse KP werden intern in der Synchronisationseinrichtung 2 abgeleitet. Im einzelnen verfügt die Synchronisationseinrichtung 2 über eine eingangsseitige Stufe 21, durch die Horizontalsynchronsignale aus dem digitalen Videosignal dFBAS abgetrennt werden. Die Horizontalsynchronsignale werden einem Phasenregelkreis 22, z. B. einer digitalen HPLL-Schaltung, zugeführt, dessen Ausgang den Ausgang der Synchronisationseinrichtung 2 bildet und an dem die Synchrontaktsignale Sync abgreifbar sind. Zusätzlich verfügt die Synchronisationseinrichtung über eine Steuerstufe 23 zum Regeln des Phasenregelkreises 22 sowie der Stufe 21.

Die Zeit t₂ kann verkürzt werden, wenn von der Synchronisationseinrichtung 2 ein Signal ST 2 abgegeben wird, das Auskunft über die richtige Lage dieser Klemmimpulse KP gibt. Sobald dieses Signal ST 2 anzeigt, daß die Klemmimpulse KP zeitrichtig von der Synchronisationseinrichtung 2 generiert werden, wird auf die Synchronklemmung in der dritten Phase P3 umgeschaltet. Damit muß also nicht mehr das Verstreichen der Zeit t2 abgewartet werden.

In der dritten Phase P3 wird die Analog-Digital-Wandlereinrichtung 5 überwacht. Dazu dienen die bereits erwähnten ersten und zweiten Statussignale U, UF. Zum einen wird durch das erste Statussignal U angezeigt, ob eine im Aussteuerbereich der Analog-Digital-Wandlereinrichtung 5 liegende Schwelle V_{U} mindestens einmal innerhalb der Dauer einer Zeile vom Videosignal FBAS unterschritten wird. Ist dies nicht der Fall, so startet die Steuereinrichtung 6 den Klemmvorgang von neuem. In Abhängigkeit vom zweiten Statussignal UF, das anzeigt, ob das Potential am Ausgang B der Klemmschaltung 4 unterhalb der unteren Grenze V_{L} der Analog-Digital-Wandlereinrichtung 5 liegt, sorgt die Steuereinrichtung 6 dafür, daß für die Dauer des Auftretens dieses zweiten Statussignales UF der Klemmkondensator 3 aufgeladen wird, bis das Potential des Ausgangs B der Klemmschaltung 4 wieder innerhalb des Aussteuerbereichs der Analog-Digital-Wandlereinrichtung 5 liegt.

Es ist zweckmäßig, das zweite Statussignal UF über die bereits erwähnte Tiefpaßeinrichtung zu filtern, damit die Regelung nicht auf einen verrauschten Syncboden anspricht. Bei Klemmung auf den Schwarzwertpegel des Videosignales FBAS darf diese Regelung erst ansprechen, wenn das zweite Statussignal UF breiter als der Synchronimpuls ist. Spricht diese Überwachung an, so wird die Synchronklemmung unterdrückt. In FIG 6 ist mit g das Videosignal FBAS am Ausgang B bei Klemmung auf den Schwarzwertpegel V_{B} und mit e das Videosignal FBAS bei Klemmung des Syncbodens Sy auf V_{L} gezeigt. Mit f ist das Videosignal FBAS am Ausgang B am Ende der Phase P2 bei Diodenklemmung auf V_{D} dargestellt.

Zusammenfassend kann also festgehalten werden: Durch die Abfolge von drei verschiedenen Klemmphasen P1, P2, P3 wird erfindungsgemäß sichergestellt, daß Videosignale mit beliebigen Gleichanteil optimal bezüglich ihres Synchronisationspegels in den Aussteuerbereich V_{L} - V_{H} der Analog-Digital-Wandlereinrichtung 5 verschoben werden. Störungen, wie sie z. B. durch Umschalten von Videosignalquellen mit unterschiedlichen Gleichanteilen entstehen, können zu einer plötzlichen Verschiebung des Videosignals aus dem Aussteuerbereich der Analog-Digital-Wandlereinrichtung 5 führen. Liegt das Videosignal zu weit negativ, so wird ein zweites Statussignal UF generiert und eine Nachregelung in der Steuereinrichtung vorgesehen. Liegt dagegen das Videosignal FBAS zuweit positiv, so spricht die Aussteuerungsüberwachung an, in dem ein erstes Statussignal U generiert wird, was zu einem neuen Start des Klemmvorganges führt.

Es ist zweckmäßig, die Zeitbedingungen bei dem oben beschriebenen Klemmvorgang durch einen Zähler zu realisieren, der vorzugsweise Horizontalimpulse aus der Synchronisationseinrichtung 2 zählt.

Zur Tiefpaßfilterung des zweiten Statussignales UF können unterschiedliche Schaltungsanordnungen eingesetzt werden, z. B. eine Impulsbreitenüberwachung durch einen rücksetzbaren Zähler.

Eine Amplitudenregelung des Videosignales FBAS ist für den Synchronisationsvorgang nicht notwendig, solange der Synchronisationsimpuls nicht wesentlich größer als der Aussteuerbereich der Analog-Digital-Wandlereinrichtung 5 ist. Eine Amplitudenregelung ist aber sinnvoll, wenn andere Signalkomponenten des digitalisierten Videosignales dFBAS weiterverarbeitet werden sollen. So kann beispielsweise für eine Amplitudenregelung ein Signal von der Analog-Digital-Wandlereinrichtung 5 ausgewertet werden, das ein Überschreiten der oberen Grenze V_{H} der Analog-Digital-Wandlereinrichtung 5 anzeigt.

## Patentansprüche

1. Gerät zum Verarbeiten von in Zeilen aufgeteilten Videosignalen (FBAS) mit einer Synchronabtrennstufe (17), um für die Verarbeitung notwendige Synchrontaktsignale (Sync) zu erzeugen, wobei
· vor einem Eingang (1) einer in der Synchronabtrennstufe (17) enthaltenen Synchronisationseinrichtung (2) eine Klemmschaltung (4) mit nachgeschalteter Analog-Digital-Wandlereinrichtung (5), die einen vorgegebenen Aussteuerbereich (V_{L}-V_{H}) aufweist, geschaltet ist,
· durch die Klemmschaltung (4) das Videosignal (FBAS) auf vorgegebene unterschiedliche Potentiale (V₁, V₂...) klemmbar ist und
· eine Steuereinrichtung (6) vorgesehen ist, die mit der Klemmschaltung (4) verbunden ist und durch die das Klemmen des Videosignales (FBAS) auf die vorgegebenen unterschiedlichen Potentiale (V₁, V₂...) so steuerbar ist, daß ein Synchronsignalanteil (Sy, BP) des Videosignales (FBAS) auf einen Klemmpegel (V_{B}, V_{L}) innerhalb des Aussteuerbereichs (V_{L}-V_{H}) der Analog-Digital-Wandlereinrichtung (5) gebracht wird,
**dadurch gekennzeichnet,**
daß durch die Steuereinrichtung (6) erste, zweite und dritte Steuersignale (K1, K2, K3) für die einen Klemmkondensator (3) aufweisende Klemmschaltung (4) bereitstellbar sind, um das Klemmen des Videosignales (FBAS) in mindestens drei Phasen (P1, P2, P3) zu ermöglichen:
· einer ersten Phase (P1), in der das Videosignal (FBAS) für die Dauer von mehreren Zeilen in Abhängigkeit vom ersten Steuersignal (K1) auf ein unteres Potential (V₁) des Aussteuerbereichs der Analog-Digital-Wandlereinrichtung (5) klemmbar ist;
· einer zweiten Phase (P2), in der das Videosignal (FBAS) für eine vorgebbare Zeit in Abhängigkeit vom zweiten Steuersignal (K2) auf ein oberes Potential (V₂) innerhalb des Aussteuerbereiches (V_{L}-V_{H}) der Analog-Digital-Wandlereinrichtung (5) klemmbar ist; und
· einer dritten Phase (P3), in der das Videosignal (FBAS) in Abhängigkeit vom dritten Steuersignal (K3) synchron zum Videosignal (FBAS) pulsweise auf den Klemmpegel (V_{L}, V_{B}) klemmbar ist.

2. Gerät nach Anspruch 1,
**dadurch gekennzeichnet,**
daß die Klemmschaltung (4) einen Eingang (A) und einen Ausgang (B) aufweist, daß zwischen dem Eingang (A) und Ausgang (B) der Klemmkondensator (3) angeordnet ist, und daß der Ausgang (B) mit parallel geschalteten und jeweils von der Steuereinrichtung (6) aktivierbaren Schalteinrichtungen (7; 7a, 7b, 7c) verbunden ist, um das Videosignal (FBAS) auf eines der vorgegebenen Potentiale (V₁, V₂...) für eine von der Steuereinrichtung (6) vorgegebene Zeitdauer zu schalten.

3. Gerät nach Anspruch 1 oder 2,
**dadurch gekennzeichnet**,
daß die Steuereinrichtung (6) jeweils einen Impuls eines Pulses (K) nach Ablauf einer vorgegebenen Zeitdauer nach Erscheinen des Synchronsignalanteiles (Sy, BP) erzeugt, und - nachdem die Synchronisationseinrichtung (2) einen eingeschwungenen Zustand erreicht hat - der Puls (K) in Abhängigkeit aus einem vom Synchrontaktsignal (Sync) der Synchronisationseinrichtung (2) abgeleiteten Klemmimpuls (KP) erzeugt wird.

4. Gerät nach einem der Ansprüche 1 bis 3,
**dadurch gekennzeichnet**,
daß Mittel zum Überwachen eines ersten Statussignales (U) vorgesehen sind, die angezeigen, ob eine im Aussteuerbereich der Analog-Digital-Wandlereinrichtung (5) liegende Schwelle (V_{U}) mindestens einmal innerhalb der Dauer einer Zeile vom Videosignal (FBAS) unterschritten wird und die Steuereinrichtung (6) in Abhängigkeit vom Auftreten dieses ersten Zustandes den Klemmvorgang von neuem startet.

5. Gerät nach einem der Ansprüche 1 bis 4,
**dadurch gekennzeichnet**,
daß Mittel zum Erzeugen eines zweiten Statussignales (UF) vorgesehen sind, die anzeigen, ob das Potential am Ausgang (B) der Klemmschaltung (4) unterhalb der unteren Grenze (V_{L}) der Analog-Digital-Wandlereinrichtung (5) liegt und die Steuereinrichtung (6) für die Dauer des Auftretens dieses zweiten Statussignales (UF) den Ausgang (B) der Klemmschaltung (4) auf ein Potential innerhalb des Aussteuerbereiches (V_{L}-V_{H}) der Analog-Digital-Wandlereinrichtung (5) so klemmt, daß sich der Klemmkondensator (3) aufladen kann.

6. Gerät nach Anspruch 5,
**dadurch gekennzeichnet,**
daß das zweite Statussignal (UF) über eine Tiefpaßeinrichtung (10) geführt ist.

7. Gerät nach einem der Ansprüche 1 bis 6,
**dadurch gekennzeichnet**,
daß die Klemmschaltung (4) zur Klemmung auf einen Syncboden (Sy) des Videosignales (FBAS) vorgesehen ist.

8. Gerät nach einem der Ansprüche 1 bis 7,
**dadurch gekennzeichnet**,
daß die Klemmschaltung (4) zur Klemmung auf einen Schwarzwertpegel (B) des Videosignales (FBAS) vorgesehen ist.

9. Gerät nach einem der Ansprüche 1 bis 8,
**dadurch gekennzeichnet**,
daß die Synchronisationseinrichtung (2) eine digitale HPLL-Schaltung aufweist.

## Claims

1. Device for processing video signals (FBAS) divided into lines, having a synchronization separation stage (17) for the purpose of generating synchronization clock signals (Sync) which are necessary for processing, it being the case that
· a clamping circuit (4) having a downstream analog-to-digital converter (5) which has a prescribed control range (V_{L}-V_{H}) is connected upstream of an input (1) of a synchronization device (2) contained in the synchronization separation stage (17),
· the video signal (FBAS) can be clamped by the clamping circuit (4) at different prescribed potentials (V₁, V₂...), and
· a control device (6) is provided which is connected to the clamping circuit (4) and by means of which the clamping of the video signal (FBAS) at the different prescribed potentials (V₁, V₂...) can be controlled such that a synchronization signal component (Sy, BP) of the video signal (FBAS) is brought to a clamping level (V_{B}, V_{L}) within the control range (V_{L}-V_{H}) of the analog-to-digital converter (5), characterized in that
the control device (6) can provide first, second and third control signals (K1, K2, K3) for the clamping circuit (4), which has a clamping capacitor (3), in order to enable the video signal (FBAS) to be clamped in at least three phases (P1, P2, P3):
· a first phase (P1) in which the video signal (FBAS) can be clamped for the duration of a plurality of lines as a function of the first control signal (K1) at a lower potential (V₁) of the control range of the analog-to-digital converter (5);
· a second phase (P2), in which the video signal (FBAS) can be clamped for a prescribable time as a function of the second control signal (K2) at an upper potential (V₂) within the control range (V_{L}-V_{H}) of the analog-to-digital converter (5); and
· a third phase (P3), in which the video signal (FBAS) can be clamped as a function of the third control signal (K3) in a pulsed fashion and synchronously with the video signal (FBAS) at the clamping level (V_{L}, V_{B}).

2. Device according to Claim 1, characterized in that the clamping circuit (4) has an input (A) and an output (B), in that the clamping capacitor (3) is arranged between the input (A) and output (B), and in that the output (B) is connected to parallel-connected switching devices (7; 7a, 7b, 7c) which can respectively be activated by the control device (6), in order to switch the video signal (FBAS) to one of the prescribed potentials (V₁, V₂...) for a period prescribed by the control device (6).

3. Device according to Claim 1 or 2, characterized in that the control device (6) respectively generates an impulse of a pulse (K) after expiry of a prescribed period after the appearance of the synchronization signal component (Sy, BP), and - after the synchronization device (2) has reached a settled state - the pulse (K) is generated as a function of a clamping pulse (KP) derived from the synchronization signal (Sync) of the synchronization device (2).

4. Device according to one of Claims 1 to 3, characterized in that means are provided for the purpose of monitoring a first status signal (U) which indicate whether a threshold (V_{U}) situated in the control range of the analog-to-digital converter (5) is undershot at least once within the duration of a line of the video signal (FBAS), and the control device (6) starts the clamping operation anew as a function of the occurrence of this first state.

5. Device according to one of Claims 1 to 4, characterized in that means are provided for generating a second status signal (UF) which indicate whether the potential at the output (B) of the clamping circuit (4) is situated below the lower limit (V_{L}) of the analog-to-digital converter (5), and for the duration of the occurrence of this second status signal (UF) the control device (6) clamps the output (B) of the clamping circuit (4) at a potential within the control range (V_{L}-V_{H}) of the analog-to-digital converter (5) such that the clamping capacitor (3) can recharge.

6. Device according to Claim 5, characterized in that the second status signal (UF) is lead via a low-pass device (10).

7. Device according to one of Claims 1 to 6, characterized in that the clamping circuit (4) is provided for the purpose of clamping onto a sync floor (Sy) of the video signal (FBAS).

8. Device according to one of Claims 1 to 7, characterized in that the clamping circuit (4) is provided for the purpose of clamping at a black level (B) of the video signal (FBAS) .

9. Device according to one of Claims 1 to 8, characterized in that the synchronization device (2) has a digital HPLL circuit.

## Revendications

1. Appareil de traitement de signaux vidéo (FBAS) répartis en lignes comportant un étage (17) de séparation de synchronisation, pour produire des signaux (Sync) de cadence de synchronisation nécessaires au traitement,
- un circuit (4) de verrouillage, en aval duquel est branché un dispositif (5) convertisseur analogique-numérique ayant un domaine (V_{L}-V_{H}) d'utilisation prescrit, étant branché en amont d'une entrée (1) d'un dispositif (2) de synchronisation contenu dans l'étage (17) de séparation de synchronisation,
- le signal vidéo (FBAS) pouvant être verrouillé par le circuit (4) de verrouillage sur des potentiels différents prescrits (V₁, V₂ ...) et
- il est prévu un dispositif (6) de commande, qui est relié au circuit (4) de verrouillage et par lequel le verrouillage du signal vidéo (FBAS) sur les potentiels (V₁, V₂ ...) différents prescrits peut être commandé de telle sorte qu'une composante (Sy, BP) de signal de synchronisation du signal vidéo (FBAS) soit amené à un niveau (V_{B}, V_{L}) de verrouillage dans le domaine (V_{L}-V_{H}) d'utilisation du dispositif (5) convertisseur analogique-numérique,
caractérisé en ce que
des premiers, deuxièmes et troisièmes signaux (K1, K2, K3) de commande peuvent être tenus prêts par le dispositif (6) de commande pour le circuit (4) de verrouillage comportant un condensateur (3) de verrouillage, pour permettre le verrouillage du signal vidéo (FBAS) en au moins trois phases (P1, P2, P3) :
- dans une première phase (P1), dans laquelle le signal vidéo (FBAS) peut être verrouillé pendant la durée de plusieurs lignes en fonction du premier signal (K1) de commande sur un potentiel inférieur (V₁) du domaine d'utilisation du dispositif (5) convertisseur analogique-numérique ;
- pendant une deuxième phase (P2), dans laquelle le signal vidéo (FBAS) peut être verrouillé pendant un temps pouvant être prescrit en fonction du second signal (K2) de commande sur un potentiel supérieur (V₂) dans le domaine (V_{L}-V_{H}) d'utilisation du dispositif (5) convertisseur analogique-numérique ; et
- pendant une troisième phase (P3), dans laquelle le signal vidéo (FBAS) peut être verrouillé en fonction du troisième signal (K3) de commande en synchronisme avec le signal (FBAS) vidéo de manière impulsionnelle sur le niveau (V_{L}, V_{B}) de verrouillage.

2. Appareil suivant la revendication 1,
caractérisé en ce que
le circuit (4) de verrouillage comporte une entrée (A) et une sortie (B), le condensateur (3) de verrouillage est disposé entre l'entrée (A) et la sortie (B) et la sortie (B) est reliée à des dispositifs (7 ; 7a, 7b, 7c) d'interruption branchés en parallèle et pouvant être activés chacun par le dispositif (6) de commande, pour mettre le signal vidéo (FBAS) à l'un des potentiels (V₁, V₂ ...) prescrits pour une durée prescrite par le dispositif (6) de commande.

3. Appareil suivant la revendication 1 ou 2,
caractérisé en ce que
le dispositif (6) de commande produit une impulsion d'une pulsion (K) après l'écoulement d'une durée prescrite après que la composante (Sy, BP) du signal de synchronisation est apparue et, après que le dispositif (2) de synchronisation a atteint un état établi, la pulsion (K) est produite en fonction d'une impulsion (KP) de verrouillage obtenue à partir du signal (Sync) de cadence de synchronisation du dispositif (2) de synchronisation.

4. Appareil suivant l'une des revendications 1 à 3,
caractérisé en ce que
il est prévu des moyens de contrôle d'un premier signal (U) d'état, qui indiquent si il est passé au moins une fois pendant la durée d'une ligne du signal (FBAS) vidéo sous un seuil (V_{U}) se trouvant dans le domaine d'utilisation du dispositif convertisseur (5) analogique-numérique et si le dispositif (6) de commande recommence l'opération de verrouillage en fonction de l'apparition de ce premier état.

5. Appareil suivant l'une des revendications 1 à 4,
caractérisé en ce que
il est prévu des moyens de production d'un second signal (UF) d'état, qui indiquent si le potentiel à la sortie (B) du circuit (4) de verrouillage est plus petit que la limite inférieure (V_{L}) du dispositif (5) convertisseur analogique-numérique et le dispositif (6) de commande verrouille pour la durée de l'apparition de ce second signal (UF) d'état la sortie (B) du circuit (4) de verrouillage sur un potentiel se trouvant dans le domaine (V_{L}-V_{H}) d'utilisation du dispositif (5) convertisseur analogique-numérique de telle sorte que le condensateur (3) de verrouillage puisse se charger.

6. Appareil suivant la revendication 5,
caractérisé en ce que
le second signal (UF) d'état est guidé par l'intermédiaire d'un dispositif (10) passe-bas.

7. Appareil suivant l'une des revendications 1 à 6,
caractérisé en ce que
le circuit (4) de verrouillage est prévu pour le verrouillage sur un fond (Sy) de synchronisation du signal vidéo (FBAS).

8. Appareil suivant l'une des revendications 1 à 7,
caractérisé en ce que
le circuit (4) de verrouillage est prévu pour le verrouillage sur un niveau (B) du noir du signal vidéo (FBAS).

9. Appareil suivant l'une des revendications 1 à 8,
caractérisé en ce que
le dispositif (2) de synchronisation comporte un circuit numérique HPLL.
